Europäisches Patentamt

European Patent Office

Office européen des brevets

(11) Veröffentlichungsnummer : **0 071 955**
**B1**

(12) **EUROPÄISCHE PATENTSCHRIFT**

(45) Veröffentlichungstag der Patentschrift :
**10.09.86**

(51) Int. Cl.⁴ : **B 65 G 43/10**

(21) Anmeldenummer : **82106993.7**

(22) Anmeldetag : **03.08.82**

(54) **Verfahren zur kontinuierlichen Transportgeschwindigkeitsregelung von Transporteuren.**

(30) Priorität : **07.08.81 DE 3131352**

(43) Veröffentlichungstag der Anmeldung :
**16.02.83 Patentblatt 83/07**

(45) Bekanntmachung des Hinweises auf die Patenterteilung : **10.09.86 Patentblatt 86/37**

(84) Benannte Vertragsstaaten :
**BE DE FR IT NL SE**

(56) Entgegenhaltungen :
**DE-A- 2 505 622**
**DE-A- 2 830 196**
**FR-A- 2 240 876**
**US-A- 3 200 932**

(73) Patentinhaber : **Holstein & Kappert GmbH**
**Juchostrasse 20**
**D-4600 Dortmund 1 (DE)**

(72) Erfinder : **Bargelé, Norbert, Dr.**
**Flachskamp 57**
**D-4670 Lünen-Alstedde (DE)**
Erfinder : **Kautz, Ralf-Dieter**
**Heinrich-König-Strasse 4**
**D-4630 Bochum (DE)**
Erfinder : **Boecker, Horst**
**Wickeder Chaussee 147**
**D-4755 Holzwickede (DE)**

Jouve, 18, rue St-Denis, 75001 Paris, France

## Beschreibung

Die Erfindung bezieht sich auf ein Verfahren zur kontinuierlichen Transportgeschwindigkeitsregelung von Transporteuren gemäß dem Oberbegriff von Anspruch 1 (bekannt von DE-A-2 505 622.

Beispielsweise in der Getränkeindustrie befinden sich zwischen den einzelnen Behandlungsmaschinen Transporteure, deren jeweiliger Befüllungsgrad mittels Staudruckschalter ermittelt wird. Zur Verminderung des auf diesen Transporteuren anstehenden Staudrucks werden die jeweils gefüllten Förderstrecken durch Betätigung dieser Schalter teilweise stillgesetzt und nach Auflösen des Staus wieder angetrieben. In derartigen Fällen wird nur eine für den Transport vorgesehene Geschwindigkeit realisiert.

Als nachteilig ist dabei anzusehen, daß zur Steuerung der zwischen den Behandlungsmaschinen vorgesehenen Förderern grundsätzlich ein Staudruck vorgesehen sein muß, der aber insbesondere im Hinblick auf den Lärm und eine Beschädigung von Flaschen und dgl. unerwünscht ist. Durch das Ein- und Ausschalten dieser Transporteure entstehen Lücken im Transportgut, die bei Anfahren der Transporteure aufgeschlossen werden und dabei entsprechende Impulsgeräusche verursachen.

Diese vorgeschilderten Nachteile können auch bei einer stufenweisen Geschwindigkeitssteuerung, beispielsweise bei Einsatz von polumschaltbaren Motoren oder dgl., nicht beseitigt werden.

Entsprechend dem Oberbegriff von Anspruch 1 beschreibt die DE-A-2 505 622 eine Förderbahn mit zwei Stationen zum Behandeln von Gegenständen, bei welcher an derjenigen Stelle, wo die Gegenstände vom Förderer auf die Pufferstrecke gelangen, ein Zählorgan vorgesehen ist. An der Stelle, wo die Gegenstände aus der Schlange auf den Beschickungsförderer überführt werden, ist ein weiteres Zählorgan vorgesehen. Die beiden Zählorgane sind über eine Leitung an eine Registriervorrichtung angeschlossen, welche die Differenz zwischen den von den beiden Zählorganen ermittelten Zahlenwerten registriert. Die registrierte Differenz dient zur Regelung der Steuergeschwindigkeit des Pufferstreckenförderers, in dem die Registriervorrichtung über eine Leitung mit dem Motor verbunden ist. Dieses bekannte Verfahren beruht im wesentlichen auf der Differenzanzahlbestimmung von Gegenständen auf einem Förderabschnitt. Die in diesem Verfahren enthaltenen Nachteile sind folgendermaßen zu beschreiben :

Eine exakte Geschwindigkeitseinstellung auf Transportstrecken ist nicht möglich, da die Grenzlinie der frei transportierten Gegenstände zu den im Stau befindlichen Gegenständen nicht exakt lokalisiert werden kann. Die einfache Differenzmessung zeigt zwar die z. Zt. aktuelle Anzahl von Gegenständen auf einem solchen Transportband, gibt aber keine Information über die eigentliche Dichte-Verteilung der transportierten Gegenstände an.

Dies gilt auch für den aus der US-PS-3 200 932 bekannten Stand der Technik.

Die Erfindung hat sich nun unter Vermeidung der aufgezeigten Nachteile die Aufgabe gestellt, ständig eine solche Anzahl von Gefäßen, Flaschen, Dosen und dgl. auf den jeweiligen Transportabschnitten staudrucklos bereitzuhalten, wie sie zur lückenlosen Beschickung der nachfolgenden Behandlungsmaschine notwendig ist, wobei unter Berücksichtigung der Durchsatzleistung der miteinander korrespondierenden Maschinen im Bereich einer solchen Strecke eine Aufholtransportgeschwindigkeit und bei ausreichendem bzw. überschüssigem Flaschenmaterial eine Beeinflussung dieser Geschwindigkeit gegeben sein soll. Diese Aufgabe wird gemäß der Erfindung bei einem Verfahren der eingangs genannten Art dadurch gelöst, daß der Befüllungsgrad der einzelnen Förderstrecken und die Trennlinie gestauter Flaschen zu frei transportierten Flaschen aufgrund der Durchsatzleistung vor und hinter diesen Zwischenförderern durch eine Flaschenpositionsverfolgung ermittelt wird und daß die auf diese Weise erhaltene Flaschenzahl und deren flächenmäßige Verteilung auf diesen Zwischenförderern in ein Leitsignal zur kontinuierlichen Regelung der Transportgeschwindigkeit der Förderstrecken und/oder Verteil- bzw. Zusammenführstationen umgesetzt wird. Weitere Merkmale der Erfindung ergeben sich aus den weiteren Ansprüchen.

Mit diesem erfindungsgemäßen Verfahren wird ein weitgehendst staudruckfreier Transport des Fördergutes auf vollständig gefüllten Transportabschnitten sichergestellt. Auf teilweise gefüllten Transportabschnitten wird durch Regelung der Transportgeschwindigkeit der minimale Staudruck, der zur Aufrechterhaltung der jeweils notwendigen Packungsdichte erforderlich ist, eingestellt. Dieser minimale bzw. optimierte Druck steht dabei im wesentlichen konstant zur Verfügung, so daß sonst übliche partiell unvermeidbare übermäßige Druckbeanspruchungen des jeweiligen Fördergutes grundsätzlich ausgeschaltet werden. Dieser partielle Staudruck entsteht bei Förderern gemäß dem Stand der Technik vorwiegend im vorderen, der Behandlungsmaschine zugewandten Teil bzw. in den Abschnittsübergängen.

Aufgrund der durch das erfindungsgemäße Verfahren gegebenen Informationen im Hinblick auf die aktuelle Befüllung der jeweiligen Abschnitte können auch gering befüllte Abschnitte mit hohen Geschwindigkeiten gefahren werden, die bei sonst üblichen Transportanlagen aufgrund der Lärmemissionen und der starken Beanspruchung des Fördergutes nicht verwirklicht werden können. Ein weiterer wesentlicher Vorteil der Erfindung besteht darin, daß aufgrund der höheren Arbeits- bzw. Abschnittsgeschwindigkeiten größere effektive Pufferkapazitäten erreicht werden, die bei den bekannten Anlagen nur durch entsprechende Vergrößerung der eigentlichen Transportfläche gegeben sind bzw. zur Verfügung gestellt werden können.

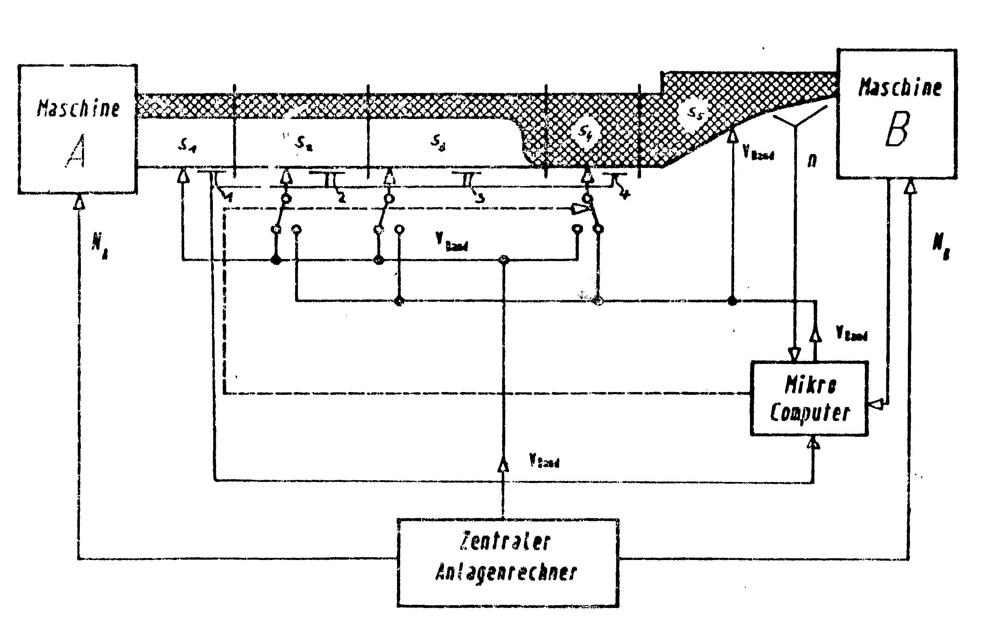

Im nachfolgenden wird die Erfindung anhand eines in der Zeichnung dargestellten Ausführungsbeispiels erläutert :

Das Ausführungsbeispiel zeigt eine Behandlungsmaschine A mit einer im Transportfluß nachgeschalteten weiteren Behandlungsmaschine B. Zwischen beiden Maschinen A, B befindet sich der eigentliche Zwischenförderer S, der aus mehreren Einzelabschnitte S1 bis S5 besteht. Jeder dieser Transportabschnitte ist in seiner Geschwindigkeit kontinuierlich einstellbar. Diesen Abschnitten sind Sensoren 1 bis 4 zugeordnet. Die Impulse dieser Sensoren 1 bis 4 stehen sowohl einer zentralen Verarbeitungsstelle C, beispielsweise einem Rechner, als auch einer dezentralen, einer Maschine B und/oder einem Abschnitt S5 zugeordneten Verarbeitungsstelle D zur Verfügung.

Über Umschaltorgane E 1 bis E 3 kann von einer zentralen Verarbeitungsstelle C die Geschwindigkeitsvorgabe für jeden einzelnen Transportabschnitt der dezentralen Verarbeitungsstelle D übertragen werden. Als dezentrale Verarbeitungsstelle D kann beispielsweise ein Mikroprozessor vorgesehen sein, der eine staudrucklose Gefäßvereinzelungsanlage vor der Behandlungsmaschine ansteuert.

Im Ausführungsbeispiel ist die Anlage in einem mittleren Betriebszustand dargestellt. Es werden beispielsweise Mehrwegflaschen behandelt. Die Flaschen verlassen die Behandlungsmaschine A in ungestauter lockerer Formation und werden auf den Abschnitten S1 bis S3 mit maximal erreichbarer Geschwindigkeit weitertransportiert. Die Geschwindigkeitsvorgabe für die Abschnite S1 und S2 erfolgt von der zentralen Verarbeitungsstelle C. Im Bereich des Abschnittes S3 schließen sich die Flaschen dem sich auf den Abschnitten S4 und S5 befindlichen Flaschenpulk an. Die zentrale Verarbeitungsstelle C stellt auf dem Abschnitt S3 eine von der Länge des Pulks auf S3 abhängige Geschwindigkeit ein. Dabei wird mit zunehmender Pulklänge die Zuführgeschwindigkeit vermindert. Auf diese Weise baut sich auf S3 nur der zum Anschließen der Flaschen an das Ende des Pulks notwendige Anschlußdruck auf.

Demgegenüber weist die dezentrale Verarbeitungsstelle D dem Abschnitt S4 eine der Durchsatzleistung der Behandlungsmaschine B angepaßte Fördergeschwindigkeit zu, die in diesem Bereich einen drucklosen Transport des Fördergutes bzw. der Flaschen garantiert. Der Abschnitt S5 wird entsprechend S4 beeinflußt.

Die Information zur Bestimmung der einzelnen Abschnittsgeschwindigkeiten sowie Umschaltung vom zentralen Rechner auf die dezentrale Verarbeitungsstelle D werden vom zentralen Rechner C aufgrund einer von den Durchsatzleistungen der zugeordneten Maschinen A, B beeinflußten Flaschenverfolgung gewonnen. Zu diesem Zwecke ermittelt und speichert der Prozeßrechner 4 die Position jeder auf den Transportbändern bzw. Abschnitten S1 bis S5 befindlichen Flaschen sowie die Position des jeweiligen Pulkendes und die im Pulk befindliche Flaschenzahl.

Diese Information stellt der Prozeßrechner zur Regelung zur Verfügung. Die Flaschenverfolgung wird mittels der an den einzelnen Abschnitten S1 bis S4 angeordneten Sensoren 1 bis 4 beeinflußt, korrigiert und gegebenenfalls adaptiv verändert und optimiert.

## Patentansprüche

1. Verfahren zur kontinuierlichen Transportgeschwindigkeitsregelung von Transporteuren mit mehreren in Durchlaufrichtung parallel und/oder hintereinander geschalteten Behandlungsstationen, die durch Zwischenförderer, die aus einem oder mehreren einzeln angetriebenen Förderstrecken und/oder Verteil- bzw. Zusammenführstationen bestehen, miteinander verbunden sind und wobei die Transportgeschwindigkeit der einzelnen Förderstrecken beeinflußbar ist, dadurch gekennzeichnet, daß der Befüllungsgrad der einzelnen Förderstrecken (S1 bis S5) und die Trennlinie gestauter Flaschen zu frei transportierten Flaschen aufgrund der Durchsatzleistung vor und hinter diesen Zwischenförderern durch eine Flaschenpositionsverfolgung ermittelt wird und daß die auf diese Weise erhaltenen Flaschenzahl und deren flächenmäßige Verteilung auf diesen Zwischenförderern in ein Leitsignal zur kontinuierlichen Regelung der Transportgeschwindigkeit der Förderstrecken und/oder Verteil- bzw. Zusammenführstationen umgesetzt wird.

2. Verfahren nach Anspruch 1, dadurch gekennzeichnet, daß bei vollständig gefüllten Förderstrecken (S1-S5) die Transportgeschwindigkeit dieser Strecke an die Befüll- und/oder Abgabeleistung der an den Zwischenförderern, zu dem die Transportstrecke gehört, angrenzenden Behandlungsstationen (A, B) angepaßt wird.

3. Verfahren nach Anspruch 1 und 2, dadurch gekennzeichnet, daß durch an den Zwischenförderern (S1-S5) angebrachte Sensoren (1-4) die mit der Positionsverfolgung errechnete Verteilung korrigiert wird.

4. Verfahren nach den vorhergehenden Ansprüchen, dadurch gekennzeichnet, daß durch die Sensorimpulse die rechnerische Ermittlung der Flaschenverteilung auf dem Zwischenförderer (S1-S5) adaptiv verändert wird.

5. Verfahren nach Anspruch 1, dadurch gekennzeichnet, daß durch Sensoren im Bereich des Zwischenförderers eine drucklose Förderung des Transportgutes gesteuert und die Geschwindigkeitsauswahl durch diese Sensoren beeinflußbar ist.

6. Verfahren nach den vorhergehenden Ansprüchen, dadurch gekennzeichnet, daß bei Vorhandensein einer und/oder mehrerer dezentraler Individualsteuerungen (D) bei Erreichen vorbestimmter Befüllung der zugeordneten Förderstrecken (S1-S5) die Regelimpulse einer Zentralsteuerung (C) einer dezentralen Individualsteuerung (D) zugeordnet werden.

7. Verfahren nach den vorhergehenden Ansprüchen, dadurch gekennzeichnet, daß die Verarbeitung der Sensorsignale durch einen Mikrorechner vorgenommen wird.

## Claims

1. Method of continuously governing the conveying speed of conveyors having a plurality of treatment stations which are disposed parallel to and/or behind one another in the direction of travel and which are interconnected by means of intermediate conveyors which comprise one or a plurality of individually driven conveyor tracks and/or distribution or collection stations, and wherein the conveying speed of the individual conveyor tracks is controllable, characterised in that the filling level of the individual conveyor tracks (S1 to S5) and the parting line between loaded bottles and freely conveyed bottles are determined by tracking the bottle positions on the basis of the throughput capacity upstream and downstream of these intermediate conveyors, and in that the number of bottles obtained in this manner and their distribution over the surfaces of these intermediate conveyors are converted into a guide signal for continuously governing the conveying speed of the conveyor tracks and/or distribution or collection stations.

2. Method according to claim 1, characterised in that, when the conveyor tracks (S1-S5) are completely filled, the conveying speed of this track is adapted to the filling and/or discharging capacity of the treatment stations (A, B) which abut against the intermediate conveyors to which the conveyor track belongs.

3. Method according to claims 1 and 2, characterised in that the distribution, calculated by the tracking of positions, is corrected by sensors (1-4) mounted on the intermediate conveyors (S1-S5).

4. Method according to the preceding claims, characterised in that the computerised determination of the distribution of bottles over the intermediate conveyors (S1-S5) is suitably modified by the sensor pulses.

5. Method according to claim 1, characterised in that a pressureless conveyance of the goods for conveyance is controlled by sensors in the region of the intermediate conveyor, and the selection of speed is controllable by means of these sensors.

6. Method according to the preceding claims, characterised in that, with the presence of one and/or a plurality of decentral individual controls (D) when a predetermined filling of the associated conveyor tracks (S1-S5) is achieved, the regulating pulses of a central control (C) are associated with a decentral individual control (D).

7. Method according to the preceding claims, characterised in that the processing of the sensor signals is effected by means of a micro computer.

## Revendications

1. Procédé pour la régulation continue de la vitesse de transfert de transporteurs, à plusieurs stations de traitement reliées en parallèle et/ou en série dans le sens de l'écoulement, stations reliées entre elles par des convoyeurs intermédiaires, constitués d'une où de plusieurs sections de transport et/ou stations de distribution ou de concentration à commande individuelle, la vitesse de transfert des diverses sections pouvant être influencée, caractérisé en ce que le degré de remplissage des diverses sections de transport (S1 à S5), et la ligne de séparation entre les bouteilles retenues et les bouteilles circulant librement, est déterminée sur base du débit devant et derrière ces convoyeurs intermédiaires par une poursuite de la position des bouteilles, et en ce que le nombre de bouteilles obtenu par cette méthode et leur répartition par unité de surface sur lesdits convoyeurs intermédiaires sont transformés en un signal pilote pour la régulation continue de la vitesse de transfert des sections de transport et/ou des stations de distribution ou de concentration.

2. Procédé selon la revendication 1, caractérisé en ce que, lorsque les sections de transport (S1-S5) sont complètement occupées, la vitesse de transfert de ladite section est adaptée à la capacité de remplissage et/ou de vidange des stations de traitement (A, B) contiguës aux convoyeurs intermédiaires dont la section de transport fait partie.

3. Procédé selon les revendications 1 et 2, caractérisé en ce que la répartition calculée à l'aide de la poursuite de position est corrigée au moyen de capteurs (1-4) montés sur les convoyeurs intermédiaires (S1-S5).

4. Procédé selon les revendications qui précèdent, caractérisé en ce que la recherche par calcul de la répartition des bouteilles sur le convoyeur intermédiaire (S1-S5) est adaptée par les impulsions des capteurs.

5. Procédé selon la revendication 1, caractérisé en ce que des capteurs placés dans la zone du convoyeur intermédiaire permettent un transport exempt de poussée des produits transportés et permettent d'influencer la sélection de vitesse.

6. Procédé selon les revendications qui précèdent, caractérisé en ce que, en cas de présence d'une et/ou plusieurs commandes individuelles décentralisées (D), les impulsions de régulation d'une commande centrale (C) sont appliquées à une commande individuelle décentralisée (D) lors de l'atteinte d'un remplissage prédéterminé des sections de transport (S1-S5) correspondantes.

7. Procédé selon les revendications précédentes, caractérisé en ce que le traitement des signaux de capteur est effectué par un microordinateur.